# NEW EUROPEAN PATENT SPECIFICATION

(11) **EP 1 073 339 B2**
(45) Date of publication and mention of the opposition decision: **16.04.2008**
(45) Mention of the grant of the patent: 27.11.2002
(21) Application number: 99911638.7
(22) Date of filing: 30.03.1999
(51) Int. Cl.: A21D 8/04, A21D 2/26

(54) **PREPARATION OF DOUGH AND BAKED PRODUCTS**
HERSTELLUNG VON TEIG SOWIE BACKPRODUKTEN
PREPARATION DE PATE ET DE PRODUITS DE BOULANGERIE

(30) Priority: 20.04.1998 DK 54398
(43) Date of publication of application: 07.02.2001
(73) Proprietor: Novozymes A/S, 2880 Bagsvaerd (DK)
(72) Inventor: SPENDLER, Tina, DK-2880 Bagsv rd (DK); NILSSON, Lone, CH-4102 Binningen (CH); FUGLSANG, Claus, Crone, DK-2880 Bagsv rd (DK)
(74) Representative: Stevens, Ian Edward
(86) International application number: PCT/DK1999/000185
(87) International publication number: WO 1999/053769

(56) References cited:
- EP-A- 0 109 244
- EP-A- 0 120 693
- EP-A- 0 403 553
- EP-A- 0 575 133
- EP-A- 0 869 167
- EP-A2- 0 132 289
- EP-A2- 0 171 995
- WO-A-98/31790
- WO-A1-91/04669
- US-A- 4 567 046
- US-A- 4 654 216
- Outtrup, H. and Norman, B.E. (1984)Starch/Stärke, vol. 36, n° 12, p. 405-411
- Christophersen, C. et al (1998), Starch/Stärke, vol. 50, n° 1, p. 39-45
- Otha S. et al (1983), Abstracts of the AACC 68th meeting, Kansas City
- Ohta S. et al (1988), First International symposium on enzymes at the forefront of food and feed industries, p. 1-13
- Kweon M.R. et al (1994), Journal of food science, vol. 59, n° 5, p. 1072-1076
- Si J.Q. (1999), Biotimes, vol. 14, n° 1
- Miller B.S. et al (1953), Food technology, vol. 7, p. 38-42
- Product technical sheet of Amylase P
- Morgan K.R. et al (1997), Starch/Stärke, vol. 49, n° 2, p. 54-59
- JOURNAL OF FOOD SCIENCE M.R. KWEON ET AL.: 'Phospholipid Hydrolysate and Antistaling Amylase Effects on Retrogradation of Starch in Bread' vol. 59, no. 5, 1994, pages 1072 - 1076

## Description

### FIELD OF THE INVENTION

The invention relates to process for preparing a dough or a baked product prepared from the dough. More particularly, it relates to such a process where the bread has an improved softness, both when eaten on the same day and when eaten after several days storage.

### BACKGROUND OF THE INVENTION

It is well known that the softness of bread deteriorates during storage from the time of baking to the time of consumption. The term staling is used to describe such undesirable changes in the properties of the bread. Staling results in an increase of the firmness of the crumb, a decrease of the elasticity of the crumb, and changes in the crust, which becomes tough and leathery.

Enzymatic retardation of staling by means of various amylases has been described. Thus, US 2,615,810; US 3,026,205 and O. Silberstein, "Heat-Stable Bacterial Alpha-Amylase in Baking", Baker's Digest 38(4), Aug. 1964, pp. 66-70 and 72, describe the use of alpha-amylase. WO 91/04669 (Novo Nordisk) describes the use of a maltogenic alpha-amylase from *Bacillus stearothermophilus*. It is also known to use p-amylase to retard staling.

It is also known to add a phospholipase to dough. Thus, US 4,567,046 and EP 171,995 (both to Kyowa Hakko) disclose that the addition of phospholipase A enhances the properties of dough and bread, including retardation of the staling.

M.R. Kweon et al., Journal of Food Science, 59 (5), 1072-1076 (1994) disclose the effect of 2-4 % by weight of phospholipid hydrolysate together with an antistaling amylase on the retrogradation of starch in bread.

### SUMMARY OF THE INVENTION

The inventors confirmed that the addition of an anti-staling maltogenic alpha-amylase reduces the rate of crumb firming during storage for 1-7 days after baking, but they found that there is a need to improve the softness in the initial period after baking, particularly the first 24 hours after baking. They further found that this can be achieved by using a phospholipase, so that bread made by the combined use of an anti-staling maltogenic alpha-amylase and a phospholipase has improved softness, both when eaten on the same day and when stored for several days after baking. There is no significant change in the taste or smell of the baked product.

Accordingly, The invention provides a process for preparing a dough or a baked product prepared from the dough as claimed in the appended Claim 1. The invention also provides a dough as claimed in the appended Claim 11 and a pre-mix as claimed in the appended Claim 12.

### DETAILED DESCRIPTION OF THE INVENTION

The anti-staling Maltogenic alpha-amylase used in the invention is effective in retarding the staling (crumb firming) of baked products.

The amylase preferably has a temperature optimum in the presence of starch in the range of 30-90°C, preferably 50-80°C, particularly 55-75°C, e.g. 60-70°C. The temperature optimum may be measured in a 1 % solution of soluble starch at pH 5.5.

The anti-staling maltogenic alpha-amylase (EC 3.2.1.133), may be from *Bacillus*. A maltogenic alpha-amylase from *B*. *stearothermophilus* strain NCIB 11837 is commercially available from Novo Nordisk A/S under the tradename Novamyl®. It is further described in US 4,598,048 and US 4,604,355 and in C. Christophersen et al., Starch, vol. 50, No. 1, 39-45 (1997).

The anti-staling maltogenic alpha-amylase is added in an effective amount for retarding the staling (crumb firming) of the baked product. The amount of anti-staling maltogenic alpha-amylase will typically be in the range of 0.01-10 mg of enzyme protein per kg of flour, e.g. 1-10 mglkg. The maltogenic alpha-amylase may be added in an amount of 50-5000 MANU/kg of flour, e.g. 100-1000 MANU/kg. One MANU (Maltogenic Amylase Novo Unit) is defined as the amount of enzyme required to release one µmol of maltose per minute at a concentration of 10 mg of maltotriose (Sigma M 8378) substrate per ml of 0.1 M citrate buffer, pH 5.0 at 37 °C for 30 minutes.

### Phospholipase

The phospholipase may have A₁ or A₂ activity to remove fatty acid from the phospholipid and form a lyso-phospholipid. It may or may not have lipase activity, i.e. activity on triglycerides. The phospholipase preferably has a temperature optimum in the range of 30-90°C, e.g. 30-70°C.

The phospholipase may be of animal origin, e.g. from pancreas (e.g. bovine or porcine pancreas), snake venom or bee venom. Alternatively, the phospholipase may be of microbial origin, e.g. from filamentous fungi, yeast or bacteria, such as the genus or species *Aspergillus, A. niger, Dictyostelium*, *D. discoideum, Mucor, M. javanicus, M. mucedo, M. subtilissimus, Neurospora, N. crassa, Rhizomucor, R. pusillus, Rhizopus, R. arrhizus, R. japonicus, R. stolonifer, Sclerotinia, S. libertiana, Trichophyton, T. rubrum, Whetzelinia, W. sclerotiorum, Bacillus, B. megaterium, B. subtilis, Citrobacter, C. freundii, Enterobacter, E. aerogenes, E. cloacae Edwardsiella, E. tarda, Erwinia, E. herbicola, Escherichia, E. coli, Klebsiella, K. pneumoniae, Proteus, P. vulgaris, Providencia, P. stuartii, Salmonella, S. typhimurium, Serratia. S. liquefasciens, S. marcescens, Shigella, S. flexneri, Streptomyces, S. violeceoruber, Yersinia,* or Y. *enterocolitica.* A preferred phospholipase is derived from a strain of *Fusarium,* particularly F. *oxysporum,* e.g. from strain DSM 2672, as described in copending PCT/DK 97/00557.

The phospholipase is added in an amount which improves the softness of the bread during the initial period after baking, particularly the first 24 hours. The amount of phospholipase will typically be in the range of 0.01-10 mg of enzyme protein per kg of flour (e.g. 0.1-5 mg/kg) or 200-5000 LEU/kg of flour (e.g. 500-2000 LEU/kg).

A phospholipase with lipase activity is preferably added in an amount corresponding to an lipase activity of 20-1000 LU/kg of flour, particularly 50-500 LU/kg. One LU (Lipase Unit) is defined as the amount of enzyme required to release 1 µmol butyric acid per minute at 30.0°C; pH 7.0; with Gum Arabic as emulsifier and tributyrin as substrate.

### Phospholipase activity (LEU)

In the LEU assay, the phospholipase activity is determined from the ability to hydrolyze lecithin at pH 8.0, 40°C. The hydrolysis reaction can be followed by titration with NaOH for a reaction time of 2 minutes. The phospholipase from porcine pancreas has an activity of 510 LEU/mg (taken as standard), and the phospholipase from *Fusarium oxysporum* has an activity of 1540 LEU/mg.

### Phospholipid

The phospholipase may act on phospholipid provided by flour in the dough, so the separate addition of a phospholipid is not required. However, the softening effect may be increased by adding a phospholipid, preferably in an amount of 0.05-20 g/kg of flour, e.g. 0.1-10 g/kg. The phospholipid may be a diacyl-glycero-phospholipid, such as lecithin or cephalin.

### Dough

The dough of the invention generally comprises wheat meal or wheat flour and/or other types of meal, flour or starch such as corn flour, corn starch, rye meal, rye flour, oat flour, oat meal, soy flour, sorghum meal, sorghum flour, potato meal, potato flour or potato starch.

The dough of the invention may be fresh, frozen or par-baked.

The dough of the invention is normally a leavened dough or a dough to be subjected to leavening. The dough may be leavened in various ways, such as by adding chemical leavening agents, e.g., sodium bicarbonate or by adding a leaven (fermenting dough), but it is preferred to leaven the dough by adding a suitable yeast culture, such as a culture of *Saccharomyces cerevisiae* (baker's yeast), e.g. a commercially available strain of S. *cerevisiae.*

The dough may also comprise other conventional dough ingredients, e.g.: proteins, such as milk powder, gluten, and soy; eggs (either whole eggs, egg yolks or egg whites); an oxidant such as ascorbic acid, potassium bromate, potassium iodate, azodicarbonamide (ADA) or ammonium persulfate; an amino acid such as L-cysteine; a sugar; a salt such as sodium chloride, calcium acetate, sodium sulfate or calcium sulfate.

The dough may comprise fat (triglyceride) such as granulated fat or shortening, but the invention is particularly applicable to a dough where less than 1 % by weight of fat (triglyceride) is added, and particularly to a dough which is made without addition of fat.

The dough may further comprise an emulsifier such as mono- or diglycerides, diacetyl tartaric acid esters of mono- or diglycerides, sugar esters of fatty acids, polyglycerol esters of fatty acids, lactic acid esters of monoglycerides, acetic acid esters of monoglycerides, polyoxyethylene stearates, or lysolecithin, but the invention is particularly applicable to a dough which is made without addition of emulsifiers (other than optionally phospholipid).

### Additional enzyme

Optionally, an additional enzyme may be used together with the anti-staling maltogenic alpha-amylase and the phospholipase. The additional enzyme may be a second amylase, such as an amyloglucosidase, a beta-amylase, a cyclodextrin glucanotransferase, or the additional enzyme may be a peptidase, in particular an exopeptidase, a transglutaminase, a lipase, a cellulase, a hemicellulase, in particular a pentosanase such as xylanase, a protease, a protein disulfide isomerase, e.g., a protein disulfide isomerase as disclosed in WO 95/00636, a glycosyltransferase, a branching enzyme (1,4-α-glucan branching enzyme), a 4-α-glucanotransferase (dextrin glycosyltransferase) or an oxidoreductase, e.g., a peroxidase, a laccase, a glucose oxidase, a pyranose oxidase, a lipoxygenase, an L-amino acid oxidase or a carbohydrate oxidase.

The additional enzyme may be of any origin, including mammalian and plant, and preferably of microbial (bacterial, yeast or fungal) origin and may be obtained by techniques conventionally used in the art.

The xylanase is preferably of microbial origin, e.g. derived from a bacterium or fungus, such as a strain of *Aspergillus,* in particular of *A. aculeatus, A. niger* (cf. WO 91/19782), *A. awamori* (WO 91/18977), or *A. tubigensis* (WO 92/01793), from a strain of *Trichoderma*, e.g. *T. reesei*, or from a strain of *Humicola*, e.g. *H*. *insolens* (WO 92/17573, the contents of which is hereby incorporated by reference). Pentopan® and Novozym 384® (both from Novo Nordisk A/S) are commercially available xylanase preparations produced by *Trichoderma reesei*.

The amyloglucosidase may be an *A*. *niger* amyloglucosidase (such as AMG™, available from Novo Nordisk A/S, Denmark). Other useful amylase products include Grindamyl® A 1000 or A 5000 (available from Grindsted Products, Denmark) and Amylase® H or Amylase® P (available from Gist-Brocades, The Netherlands).

The glucose oxidase may be a fungal glucose oxidase, in particular an *Aspergillus niger* glucose oxidase (such as Gluzyme®, available from Novo Nordisk A/S, Denmark).

The protease may in particular be Neutrase® (available from Novo Nordisk A/S, Denmark).

The lipase may be derived from a strain of *Thermomyces* (*Humicola*), *Rhizomucor, Candida, Aspergillus, Rhizopus,* or *Pseudomonas,* in particular from *Thermomyces lanuginosus* (*Humicola lanuginosa*), *Rhizomucor miehei*, *Candida antarctica, Aspergillus niger, Rhizopus delemar* or *Rhizopus arrhizus* or *Pseudomonas cepacia*. In specific embodiments, the lipase may be Lipase A or Lipase B derived from *Candida antarctica* as described in WO 88/02775, or the lipase may be derived from *Rhizomucor miehei* as described in EP 238,023, or *Humicola lanuginosa* described in EP 305,216, or *Pseudomonas cepacia* as described in EP 214,761 and WO 89/01032.

### Baked product

The process of the invention may be used for any kind of baked product prepared from dough, either of a soft or a crisp character, either of a white, light or dark type. Examples are bread (in particular white, whole-meal or rye bread), typically in the form of loaves or rolls, French baguette-type bread, pita bread, tortillas, cakes, pancakes, biscuits, cookies, pie crusts, crisp bread, steamed bread, pizza and the like.

### Pre-mix

The present invention further relates to a pre-mix comprising flour together with an anti-staling maltogenic alpha-amylase from Bacillus, a phospholipase and optionally a phospholipid. The pre-mix may contain other dough-improving and/or bread-improving additives, e.g. any of the additives, including enzymes, mentioned above.

### Enzyme preparation

The invention provides an enzyme preparation comprising an anti-staling maltogenic alpha-amylase from Bacillus and a phospholipase, for use as a baking additive in the process of the invention. The enzyme preparation is preferably in the form of a granulate or agglomerated powder. It preferably has a narrow particle size distribution with more than 95 % (by weight) of the particles in the range from 25 to 500 µm.

Granulates and agglomerated powders may be prepared by conventional methods, e.g. by spraying the amylase onto a carrier in a fluid-bed granulator. The carrier may consist of particulate cores having a suitable particle size. The carrier may be soluble or insoluble, e.g. a salt (such as NaCI or sodium sulfate), a sugar (such as sucrose or lactose), a sugar alcohol (such as sorbitol), starch, rice, corn grits, or soy.

### EXAMPLES

### Example 1

Bread was baked with anti-staling maltogenic alpha-amylase, phospholipase and phospholipid. As reference, bread was also baked without one or more of these ingredients.

The phospholipid was lecithin at a dosage of 10 g/kg. The phospholipase was from *Fusarium oxysporum* used at a dosage of 50, 250 or 500 LU/kg, corresponding to or 0.04, 0.19 or 0.38 mg/kg. The anti-staling amylase was a maltogenic alpha-amylase from *B. stearothermophilus* (Novamyl) at a dosage of 750 MANU/kg (1 mg/kg). All dosages in the Examples were based on kg of flour.

Doughs were prepared according to a standard European straight dough procedure with 50 g yeast per kg of flour and 40 ppm of ascorbic acid. The doughs were scaled to 350 g and baked in lidded pans.

The crumb firmness was measured using a texture analyzer TA-XT2 from Stable Micro Systems. Texture was measured according to a modified ACCA method (American Cereal Chemists' Association). These measurements were made after 0 days (approximately 2 hours after baking) and again after 1, 2 and 7 days storage (wrapped in double plastic bags and stored at 22°C).

The results are shown as firmness versus additive and storage time:

| Additives | Phospholipase dosage (LU/kg) | 2 hours | 1 day | 2 days | 7 days |
|---|---|---|---|---|---|
| Invention: anti-staling Maltogenic alpha- amylase + phospholipase + phospholipid | 50 | 316 | 417 | 517 | 868 |
| | 250 | 279 | 371 | 455 | 790 |
| | 500 | 248 | 324 | 410 | 752 |
| Reference: | | | | | |
| None (control) | 0 | 296 | 875 | 1207 | 2162 |
| anti-staling Maltogenic alpha-amylase | 0 | 469 | 563 | 801 | 1083 |
| Phospholipid + phospholipase | 50 | 208 | 470 | 782 | 1560 |
| | 250 | 231 | 467 | 721 | 1424 |
| | 500 | 233 | 420 | 649 | 1303 |

### Example 2

A baking test was made as in Example 1, but with dosages of 0.5 mg/kg of the phospholipase (770 LEU/kg) and 1 g/kg of the phospholipid. The results are given as firmness after storage, and for comparison the firmness is also expressed in % of the control.

| Additives | 2 hours | 5 hours | 12 hours | 20 hours | day 2 | day 3 |
|---|---|---|---|---|---|---|
| Invention: | 181 | 195 | 223 | 241 | 277 | 303 |
| anti-staling Maltogenic alpha-amylase + phospholipase + phospholipid | (78%) | (65%) | (51%) | (46%) | (34%) | (32%) |
| Reference: | | | | | | |
| None (control) | 233 | 302 | 434 | 526 | 824 | 959 |
| | (100%) | (100%) | (100%) | (100%) | (100%) | (100%) |
| anti-staling Maltogenic alpha-amylase | 372 (160%) | 468 (155%) | 518 (119%) | 482 (92%) | 547 (66%) | 637 (66%) |
| Phospholipid + phospholipase | 144 | 144 | 212 | 258 | 364 | 482 |
| | (62%) | (47%) | (49%) | (49%) | (44%) | (50%) |

### Example 3

A baking test was made as in Examples 1 and 2, using a different phospholipase. The phospholipase was from porcine pancreas at a dosage of 2 mg/kg (1020 LEU/mg). The dosages of the anti-staling maltogenic alpha-amylase and the phospholipid were as in Example 2, and the results are presented as in Example 2:

| Additives | 2 hours | 5 hours | 12 hours | 20 hours | day 2 | day 3 |
|---|---|---|---|---|---|---|
| Invention: anti-staling Maltogenic alpha- | 342 | 411 | 420 | 431 | 485 | 559 |
| amylase + phospholipase + phospholipid | (122%) | (103%) | (80%) | (73%) | (52%) | (48%) |
| Reference: | | | | | | |
| None (control) | 281 | 398 | 524 | 588 | 937 | 1157 |
| | (100%) | (100%) | (100%) | (100%) | (100%) | (100%) |
| anti-staling Maltogenic alpha-amylase | 409 | 490 | 514 | 526 | 625 | 673 |
| | (146%) | (123%) | (98%) | (89%) | (67%) | (58%) |
| Phospholipid + phospholipase | 218 | 260 | 367 | 472 | 668 | 906 |
| | (76%) | (65%) | (70%) | (80%) | (71%) | (78%) |

The results of Examples 1-3 show that the addition of anti-staling maltogenic alpha-amylase retards the crumb firming during storage, but increases the initial firmness compared to the control without additives. The addition of phospholipid + phospholipase according to the invention is effective in avoiding the increased initial firmness and further reduces the rate of crumb firming during storage, compared to the anti-staling maltogenic alpha-amylase alone.

### Example 4

Bread loaves were baked with and without phospholipid (lecithin) as indicated below. The phospholipase was F. *oxysporum* used at a dosage of 1 mg/kg (1540 LEU/kg). The anti-staling maltogenic alpha-amylase and the baking conditions were as described in Example 1. The results are given as firmness after storage:

| | | | | Firmness | | |
|---|---|---|---|---|---|---|
| | anti-staling Maltogenic alpha-amylase MANU/kg | Phospholipase mg/kg | Phospholipid g/kg | 2 hours | 1 day | 3 days |
| Control | 0 | 0 | 0 | 294 | 687 | 1179 |
| Invention | 750 | 1 | 10 | 200 | 229 | 277 |
| | 750 | 1 | 2 | 167 | 218 | 287 |
| | 750 | 1 | 1 | 167 | 232 | 305 |
| | 750 | 1 | 0.5 | 189 | 269 | 333 |
| | 750 | 1 | 0.1 | 196 | 260 | 381 |
| | 750 | 1 | 0 | 199 | 264 | 372 |

The results show that addition of anti-staling maltogenic alpha-amylase and phospholipase clearly improve the softness, both initial softness (2 hours) and softness after storage (3 days). The softening effect can be further improved by addition of phospholipid. The optimum dosage appears to be about 1 mg/kg of phospholipid.

## Claims

1. A process for preparing a dough or a baked product prepared from the dough, comprising incorporating into the dough an anti-staling maltogenic alpha-amylase and a phospholipase, wherein the anti-staling maltogenic alpha-amylase is from Bacillus or is incorporated into the dough in an amount of 50-5000 MANU/kg of flour and one MANU unit is defined as the amount of enzyme required to release one µmol of maltose per minute at a concentration of 10 mg of maltotriose substrate per ml of 0.1 M citrate buffer, pH 5.0 at 37°C for 30 minutes.

2. The process of the preceding claim wherein the maltogenic alpha-amylase has optimum activity in bread at 70-90°C.

3. The process of either preceding claim wherein the maltogenic alpha-amylase is from *B. stearothermophilus,* preferably from strain NCIB 11837.

4. The process of any preceding claim wherein the phospholipase has a temperature optimum of 30-70°C.

5. The process of any preceding claim wherein the phospholipase is fungal, preferably from *Fusarium,* most preferably from *F. oxysporum.*

6. The process of any preceding claim which further comprises incorporating a phospholipid (preferably lecithin) into the dough.

7. The process of any preceding claim which does not comprise addition of fat.

8. The process of any preceding claim which does not comprise addition of lysophospholipid.

9. The process of any preceding claim which does not comprise addition of emulsifiers other than phospholipid.

10. The process of any preceding claim wherein the dough consists essentially of flour, water, yeast, salt and sugar.

11. A dough which comprises an anti-staling maltogenic alpha-amylase and a phospholipase, wherein the anti-staling maltogenic alpha-amylase is from Bacillus or is present in an amount of 50-5000 MANU/kg flour and one MANU unit is defined as the amount of enzyme required to release one µmol of maltose per minute at a concentration of 10 mg of maltotriose substrate per ml of 0.1 M citrate buffer, pH 5.0 at 37°C for 30 minutes.

12. A pre-mix for dough comprising flour, an anti-staling maltogenic alpha-amylase from Bacillus and a phospholipase.

13. An enzyme preparation which comprises an anti-staling maltogenic alpha-amylase from *Bacillus* and phospholipase.

14. The preparation of the preceding claim which further comprises a phospholipid, preferably lecithin.

15. The preparation of Claim 13 or 14 which further comprises a hemicellulase, preferably a pentosanase, more preferably a xylanase.

16. The preparation of any of Claims 13-15 which is a granulate or an agglomerated powder.

17. The preparation of any of Claims 13-16 wherein more than 95% (by weight) has a particle size between 25 and 500 µm.

## Patentansprüche

1. Verfahren zum Herstellen eines Teiges oder eines aus dem Teig hergestellten gebackenen Produktes, welches das Einarbeiten einer maltogenen Alphaamylase und einer Phospholipase in den Teig umfasst, die dem Altbacken-Werden entgegen wirken, wobei die maltogene Alphaamylase, die dem Altbacken-Werden entgegen wirkt, von Bacillus stammt oder in einer Menge von 50-5000 MANU/kg Mehl in den Teig eingearbeitet wird und eine MANU-Einheit als die Enzymmenge definiert ist, die erforderlich ist, um ein µmol Maltose je Minute bei einer Konzentration von 10 mg Maltotriosesubstrat je ml 0,1 M Citratpuffer, pH 5,0 bei 37°C für 30 Minuten freizusetzen.

2. Verfahren nach dem vorherigen Anspruch, wobei die maltogene Alphaamylase in Brot ein Aktivitätsoptimum bei 70-90°C aufweist.

3. Verfahren nach beiden vorherigen Ansprüchen, wobei die maltogene Alphaamylase aus *B. stearothermophilus* stammt, vorzugsweise von Stamm NCIB 11837.

4. Verfahren nach einem der vorherigen Ansprüche, wobei die Phospholipase ein Temperaturoptimum von 30-70°C aufweist.

5. Verfahren nach einem der vorherigen Ansprüche, wobei die Phospholipase fungal ist, vorzugsweise von *Fusarium,* am meisten bevorzugt von *F*. *oxysporum.*

6. Verfahren nach einem der vorherigen Ansprüche, welches das Einarbeiten eines Phospholipids (vorzugsweise Lecithin) in den Teig umfasst.

7. Verfahren nach einem der vorherigen Ansprüche, welches nicht die Zugabe von Fett umfasst.

8. Verfahren nach einem der vorherigen Ansprüche, welches nicht die Zugabe eines Lysophospholipids umfasst.

9. Verfahren nach einem der vorherigen Ansprüche, welches nicht die Zugabe von anderen Emulgatoren als einem Phospholipid umfasst.

10. Verfahren nach einem der vorherigen Ansprüche, wobei der Teig im Wesentlichen aus Mehl, Wasser, Hefe, Salz und Zucker besteht.

11. Teig, der eine maltogene Alphaamylase und eine Phospholipase aufweist, wobei die maltogene Alphaamylase, die dem Altbacken-Werden entgegen wirkt, von Bacillus stammt oder in einer Menge von 50-5000 MANU/kg Mehl in den Teig eingearbeitet wird und eine MANU-Einheit als die Enzymmenge definiert ist, die erforderlich ist, um ein µmol Maltose je Minute bei einer Konzentration von 10 mg Maltotriosesubstrat je ml 0,1 M Citratpuffer, pH 5,0 bei 37°C für 30 Minuten freizusetzen.

12. Teigvormischung, welche Mehl, eine dem Altbacken-Werden entgegen wirkende maltogene Alphaamylase von *Bacillus* und eine Phospholipase aufweist.

13. Enzymzubereitung, die eine dem Altbacken-Werden entgegen wirkende maltogene Alphaamylase von *Bacillus* und eine Phospholipase aufweist.

14. Zubereitung nach dem vorherigen Anspruch, welche des Weiteren ein Phospholipid, vorzugsweise Lecithin aufweist.

15. Zubereitung nach Anspruch 13 oder 14, welche des Weiteren eine Hemizellulase, vorzugsweise eine Pentosanase, mehr bevorzugt eine Xylanase, aufweist.

16. Zubereitung nach Anspruch 13-15, bei der es sich um ein Granulat oder ein agglomeriertes Pulver handelt.

17. Zubereitung nach Anspruch 13-16, wobei mehr als 95% (nach Gewicht) eine Teilchengröße zwischen 25 und 500 µm aufweisen.

## Revendications

1. Procédé de préparation d'une pâte ou d'un produit cuit préparé à partir de la pâte, comprenant l'incorporation dans la pâte d'une alpha-amylase maltogénique anti-rancissante et d'une phospholipase, dans lequel l'alpha-amylase maltogénique anti-rancissante provient de *Bacillus* ou est incorporée dans la pâte en une quantité de 50-5000 MANU/kg de farine et une unité MANU est définie comme étant la quantité d'enzyme requise pour libérer une µmole de maltose par minute à une concentration de 10 mg de substrat maltotriose par ml de tampon citrate 0,1 M, pH 5,0 à 37 °C pendant 30 minutes.

2. Procédé selon la revendication précédente, dans lequel l'alpha-amylase maltogénique a une activité optimale dans le pain à 70-90 °C.

3. Procédé selon une quelconque revendication précédente, dans lequel l'alpha-amylase maltogénique provient de *B. stearothermophilus,* de préférence de la souche NCIB 11837.

4. Procédé selon une quelconque revendication précédente, dans lequel la phospholipase a un optimum de température de 30-70 °C.

5. Procédé selon une quelconque revendication précédente, dans lequel la phospholipase est fongique, provient de préférence de *Fusarium,* le plus préférablement de *F*. *oxysporum.*

6. Procédé selon une quelconque revendication précédente, comprenant en outre l'incorporation d'un phospholipide (de préférence la lécithine) dans la pâte.

7. Procédé selon une quelconque revendication précédente, qui ne comprend pas l'addition de matière grasse.

8. Procédé selon une quelconque revendication précédente, qui ne comprend pas l'addition de lysophospholipide.

9. Procédé selon une quelconque revendication précédente, qui ne comprend pas l'addition d'émulsifiants autres que le phospholipide.

10. Procédé selon une quelconque revendication précédente, dans lequel la pâte est essentiellement constituée de farine, d'eau, de levure, de sel et de sucre.

11. Pâte qui comprend une alpha-amylase maltogénique anti-rancissante et une phospholipase, dans laquelle l'alpha-amylase maltogénique anti-rancissante provient de *Bacillus* ou est présente en une quantité de 50-5000 MANU/kg de farine et une unité MANU est définie comme étant la quantité d'enzyme requise pour libérer une µmole de maltose par minute à une concentration de 10 mg de substrat maltotriose par ml de tampon citrate 0,1 M, pH 5,0 à 37 °C pendant 30 minutes.

12. Prémélange pour pâte comprenant de la farine, une alpha-amylase maltogénique anti-rancissante provenant de *Bacillus* et une phospholipase.

13. Préparation enzymatique, qui comprend une alpha-amylase maltogénique anti-rancissante provenant de *Bacillus* et une phospholipase.

14. Préparation selon la revendication précédente, qui comprend en outre un phospholipide, de préférence de la lécithine.

15. Préparation selon la revendication 13 ou 14, qui comprend en outre une hémicellulase, de préférence une pentosanase, plus préférablement une xylanase.

16. Préparation selon l'une quelconque des revendications 13 à 15, qui est un granulé ou une poudre agglomérée.

17. Préparation selon l'une quelconque des revendications 13 à 16, dans laquelle plus de 95 % (en poids) a une taille de particules entre 25 et 500 µm.
